# EUROPEAN PATENT APPLICATION

(11) **EP 2 786 954 A2**
(43) Date of publication of application: **08.10.2014**
(21) Application number: 14160924.8
(22) Date of filing: 20.03.2014
(51) Int. Cl.: B66F 9/06, B62B 3/06, B66F 9/08

(54) **Folding trolley**

(30) Priority: 20.03.2013 GB 201305139
(71) Applicant: Torros Limited, Fakenham, Norfolk NR21 8NT (GB)
(72) Inventor: Payne, Matthew, Norfolk NR21 8NT (GB)
(74) Representative: ip21 Ltd

(57) **Abstract**

A folding hand operable trolley (2), comprising a chassis (4), with a support member (14), and at least one elongate mast (6) with an upper (30) and a lower extremity, said trolley further comprising a load bearing shelf (42), the shelf being attached, in use, to the mast and the position of the shelf relative to the mast being adjustable, and said mast and said chassis being pivotally linked via an elongate linking member (52),
the linking member being attached to the mast via a first pivot point (72), and being connected to the chassis via a second pivot point (76), said linking member allowing the folding of the mast with respect to the chassis, from a folded position to an upright position and vice versa, wherein in said folded position the mast occupies a plane substantially parallel to that of the chassis, and wherein in said upright position the mast is positioned substantially perpendicular to the chassis whilst the lower extremity of the mast rests on said support member; and wherein when the mast is in the upright position, the linking member extends rearwards at an angle between said mast and said chassis, thereby said support member and said linking member support the mast in said upright position.

## Description

### Field of the Invention

The invention is in the field of hand operated folding trolleys. Specifically, it relates to a hand operating folding trolley for safely raising and lowering loads. Specifically, the invention relates to a hand operating folding trolley for loading and unloading vehicles.

### Problems to be solved and prior art

A problem addressed by the invention is that of lifting and carrying a heavy load into and out of vehicles, in situations where a forklift truck is unavailable or simply too large to be of use. The key example of this is in the home delivery context. Here, a driver is employed to delivery various examples of bulky and weighty goods to a variety of domestic addresses. It would usually be expected that such addresses would have no lifting equipment. In order to remove the good from the vehicle, the driver will at least have to lift it out of the vehicle, and possibly also carry it into the home of a customer. This can lead to injury to the lifter and damage to the goods, if the lifter is not properly trained, and in any event repeated lifting, as might be expected of a delivery driver, will tend to tire the lifter out. It is the case that some trucks have a built-in lift on the back, but this does not solve the subsequent problem of moving the goods. Other examples of places in which the trolley might prove useful include, with being exhaustive onboard a ship and for loading and unloading a cupboard.

Whilst such vehicles may exist in an industrial context, they are too bulky to transport in a van or estate car.

It is amongst the objects of the invention to solve these and other problems.

### Summary of the invention

In a first broad, independent aspect, the invention comprises a folding hand operable trolley, comprising a chassis, with a support member, and at least one elongate mast with an upper and a lower extremity, said trolley further comprising a load bearing shelf, the shelf being attached, in use, to the mast and the position of the shelf relative to the mast being adjustable, and said mast and said chassis being pivotally linked via an elongate linking member, the linking member being attached to the mast via a first pivot point, and being connected to the chassis via a second pivot point, said linking member allowing the folding of the mast with respect to the chassis, from a folded position to an upright position and vice versa, wherein in said folded position the mast occupies a plane substantially parallel to that of the chassis, and wherein in said upright position the mast is positioned substantially perpendicular to the chassis whilst the lower extremity of the mast rests on said support member; and wherein when the mast is in the upright position, the linking member extends rearwards at an angle between said mast and said chassis, thereby said support member and said linking member support the mast in said upright position.

The provision of a flat folding, load bearing trolley of the sort specified above, serves to solve the problems set out above; it provides a trolley suitable for both lifting out and subsequently transporting heavy goods, which may be transported by a driver in his van, and which can straightforwardly be erected at a lifting site and then collapsed when the lifting work is done.

Preferably, the trolley further comprises a guide for guiding the displacement of the lower extremity of the mast.

The lower guide ensures that the mast does not swing about relative to the linking member in when being moved from the folded position to the upright position or vice versa.

More preferably, the guide comprises a secondary elongate linking member.

More preferably, the guide comprises a tab and groove combination.

These types of guide are most effective at controlling the movement of the mast.

Preferably, the attachment further comprises a hinge, allowing the shelf to be moved from a first position wherein the shelf occupies a substantially parallel plane to the mast, and a second position wherein the shelf occupies a position substantially perpendicular to the mast.

This allows for the shelf to be moved into the parallel position during folding, thus ensuring that the trolley can truly be folded flat, without the need to remove the shelf.

Preferably, the linking member comprises a pair of spaced, substantially parallel arms joined by a cross bar.

A linking member of this configuration combines the strength of two arms with a lightness which a solid plate would not have.

More preferably, the mast is attached to the cross bar.

Preferably the mast has a base and the trolley comprises two pairs of wheels, with the pair located nearest to the base of the mast being the larger of the said two pairs.

The provision of two pair of wheels means that the trolley can simply be pushed, without it first having to be upended and balanced on its wheels, in the manner of a conventional porter's trolley.

Preferably, the chassis comprises a raised portion upon which the base of the mast rests, when the said mast is in the upright position.

The raised position supports the mast, and also, given the arcuate path of its pivoting motion from folded position to the upright position, prevents any motion forward of perpendicular by the mast.

Preferably, the chassis comprises a releasable fastener, for securing the mast to the chassis when it is in the upright position.

This advantageously serves to bolster the connection between mast and chassis when in the upright position, and militating against collapse when there is a heavy load.

The invention also comprises a trolley substantially as described herein, with reference to and as illustrated by any combination of the text and/or drawings.

### Brief description of the figures

The invention will now be described in detail, with reference to the diagrams, of which:
Figure 1 is a diagrammatic perspective view of the trolley in an upright position;
Figure 2 is a diagrammatic perspective view of the trolley in a folded position;
Figure 3 is a diagrammatic perspective view of a portion of the trolley, in an upright position;
Figure 4 is a diagrammatic side view of the trolley in a folded position;
Figure 5 is a diagrammatic front view of the trolley in a folded position; and
Figure 6 is an exploded diagrammatic view of the trolley.

### Detailed description of the preferred embodiments

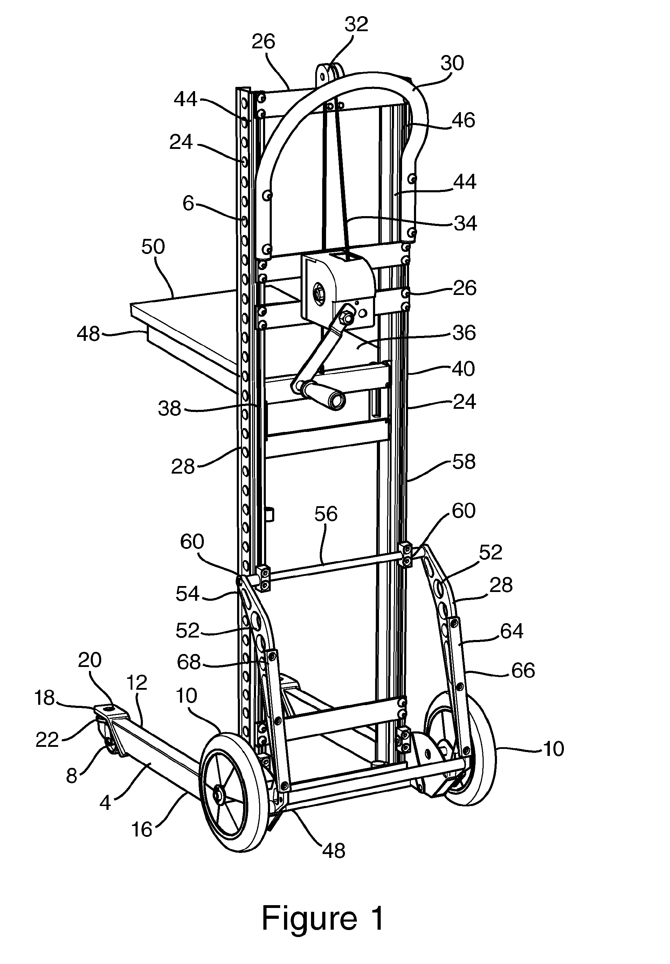

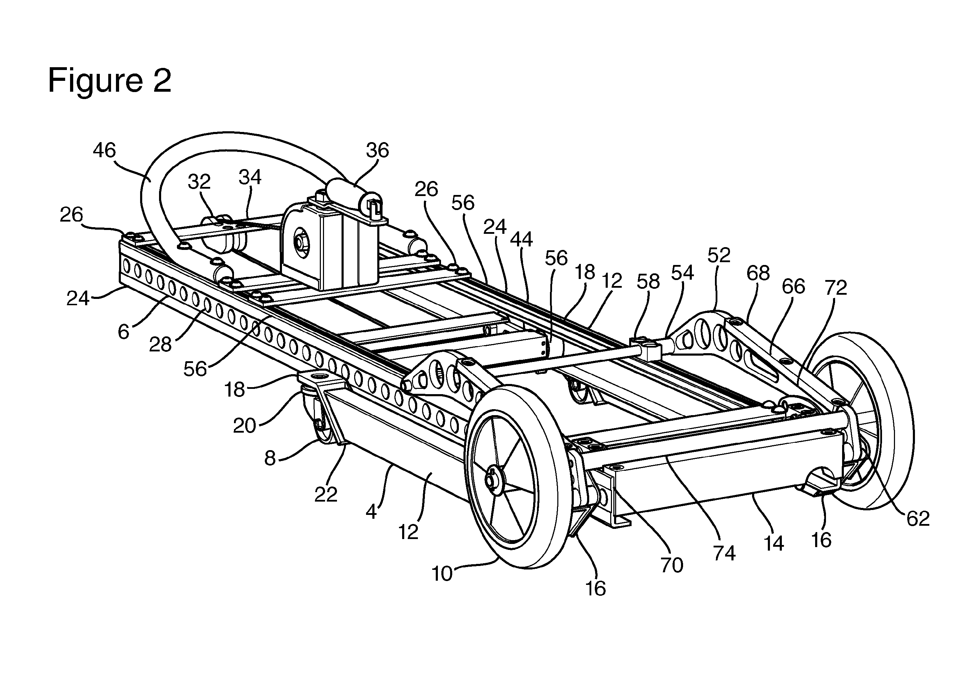

The invention comprises a trolley 2, which is collapsible. Trolley 2 can be seen in figure 1 in an upright position, and in figure 2 in a folded position. The user is able to move trolley 2 between the two positions so that trolley 2 may be folded away for storage.

In the upright position, the chassis 4 and the mast 6 are substantially perpendicular to one another, whilst in the closed position of figure 2, chassis 4 and mast 6 are substantially parallel to one another, enabling relatively easy storage, with the trolley 2 taking up little more room than a conventional folding ladder.

The chassis 4 comprises two pairs of wheels; there is a pair of front wheels 8 and a pair of flat wheels 10. The front wheels 8 are rotatably mounted on the chassis 4 permitting steering of the trolley by pushing it along on its wheels 8,10, especially when the mast 6 is in its upright position. The back wheels 10 are in contrast fixed, and provide stability. The front wheels 10 are attached to the chassis 4 in a removable fashion, being held in by pins 48, securely. The front wheels 10 may therefore be removed whenever the user wishes but most often when the trolley 2 is folded.

The chassis 4 is of a substantially U-shaped configuration, comprising parallel projections 12, which bear both pairs of wheels 8, 10. The projections 12 are joined by support member 14, onto which the mast 6 is mounted when the said mast 6 is in the upright position. In use, the chassis 4 lies close to the ground - indeed, it is angled slightly because the larger wheels 10 project further from the bottom of the chassis 4 than do the smaller wheels 8. The chassis 4 may be made from metals, plastics, alloys, woods or any combination thereof. The projections 12 each have a proximal end 16 which joins support member 14 and a distal end 18 which comprises a tapered portion 20 to which is attached the smaller wheels 8. Each tapered portion 20 comprises a fringe 22, which serves to protect the smaller wheels 8 from being knocked and damaged in use. The tapered portion 20 juts out further than small wheel 8 and is squared off at its end in order to minimise damage to things which trolley 2 might be bumped into.

Importantly, both small wheels 8 and larger wheels 10 are mounted on chassis 4; it is mast 6 which may be moved relative to chassis 4 during the folding operation - chassis 4 may be completely stationery during this operation and only mast 6 needs to move. This unitary, consolidated chassis 4 is advantageously both strong and stable. At least one of the wheels 8, 10 preferably has a butterfly pedal (not shown) that serves as a switchable stop,

Mast 6 comprises two tall elongate members 24. These elongate members 24 are bound together by a number of cross beams 26 spaced along the length of the elongate members 24 and are joined to the said elongate members by way of their being fixed into a channel in the back of said members 24 via bolts or the like. The two elongate members 24 are set apart from one another and are of equal heights. They run parallel to one another and this parallel relationship is maintained by the presence of a plurality of cross beams 26. The cross beams 26 are bolted. The elongate members 24 may be made from metals, alloys, woods, plastics, or any combination of those materials. Advantageously the elongate members 24 are made lighter and therefore easier for the user to manage due to the addition of apertures 28 which are regularly spaced in rows along the length of said elongate members; alternatively, they may also be irregularly configured.

In this embodiment, a cross beam 26 spans the elongate members 24 at the uppermost extremity 30 of the elongate members 24. It bears a pulley 32. The pulley itself bears a length of material 34 which may be wound in or let out using winch 36, which is mounted on cross beams 26. The winch 34 is actuated by rotating handle 38. Rotation of the handle 38 in a first direction will let out the material 34 causing shelf assembly 40 comprising shelf 42 to travel down the mast 6. Rotating handle 38 in a second direction leads to the raising of the shelf assembly 40 - up the mast 6. The shelf assembly 40 travels along C-shaped grooves 44 present in the inner edges of the elongate members 24. The two elongate members 24 of the mast are also bridged by handle bar 46, which provides a convenient way of pushing or pulling the trolley 2.

Shelf assembly 40 comprises shelf 42 which in use occupies a plane substantially parallel to the chassis. The shelf 42 may be fixed in that position or detachable, but preferably it will be adjustable, via either a hinge or a pivot from the extended position to a position where it is folded in a plane substantially parallel to that of the elongate members 54. The shelf 42 may be solid or alternatively may comprise a plurality of projections. In figure 1 the shelf 42 comprises an undergirding 48 of a strong material topped by a preferably softer upper 50.

The mast 6 and the chassis 4 are linked via an elongate linking member 52 which is attached pivotally at a first end 54 via cross bar 56 said cross bar 56 itself being adjustably fixed to back channels 58 via bolting assembly 60. The linking member 52 has a second end 62 which is pivotally attached to the chassis 4. When the mast 6 is in its upper position, the linking member 52 forms a strong triangular shape 64 with the chassis 4 and the mast 6. The linking member 52 comprises two parallel spaced bars 66 which provide the mast 6 with strength and support. The linking member comprises plates 68 which may be leaned on by the user to provide additional support. The linking member 52, like the mast 6, comprises a plurality of apertures 28.

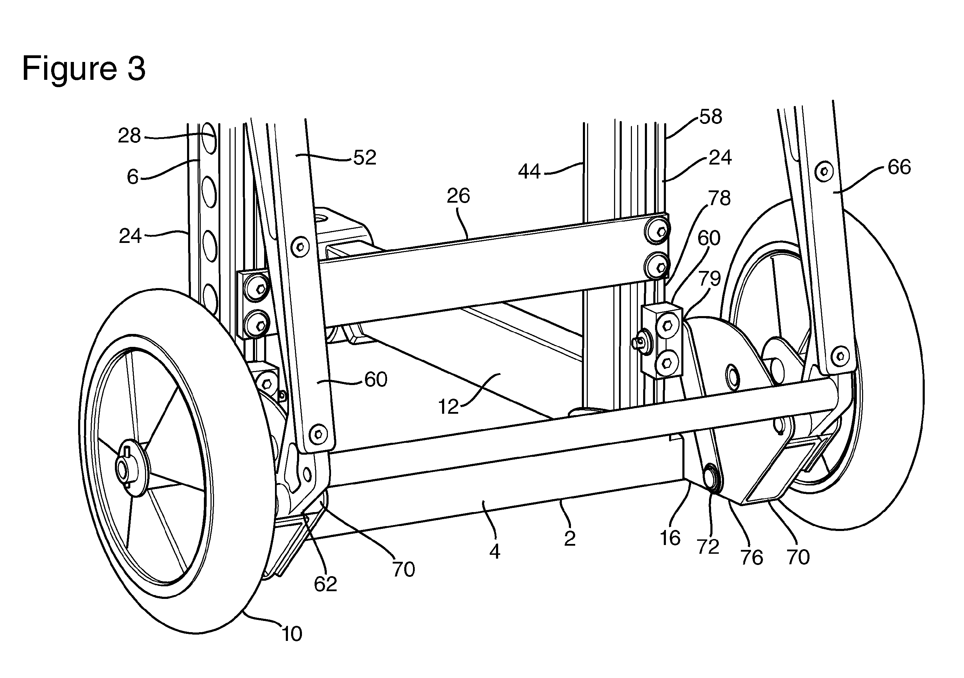

At figure 3, it can clearly be seen that linking member 52 is attached to back projections 70 of the chassis 4. The back projection 70 also serves as a point of pivotal attachment also for secondary elongate linking members 72 which, like those previously described elongate linking members 52 comprise a first end 74 pivotally attached to the mast 6 and a second end 76 pivotally attached to the chassis 4. When the mast 6 is moved from the folding position to the upright position the secondary elongate linking members 74 swing forward in an arcuate motion, guiding the mast 6 into position.

In this embodiment, moving the mast 6 into the upright position serves to trigger a spring loaded pin 78 which in turn locks the mast 6 into the chassis 4 when aligned with an appropriate hole. Preferably, there is, as in this embodiment a pin 78 and hole combination one each side of the trolley 2. The pins 78 can either be released manually or in preferable embodiments both pins 78 are joined by a string (not shown) which may be pulled to remove them from their respective holes thereby allowing the mast 6 to fold down again.

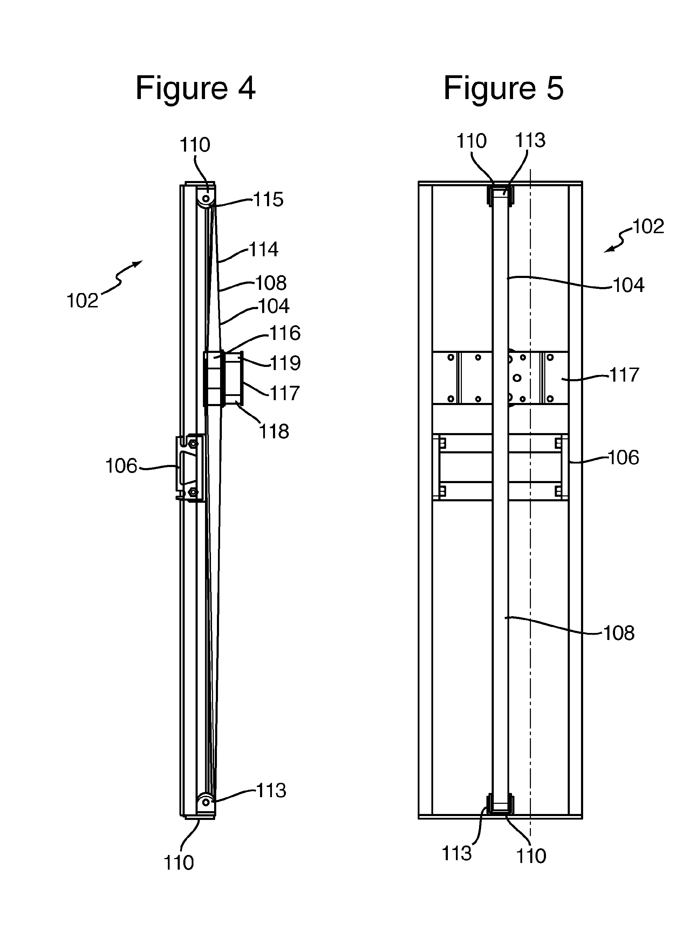

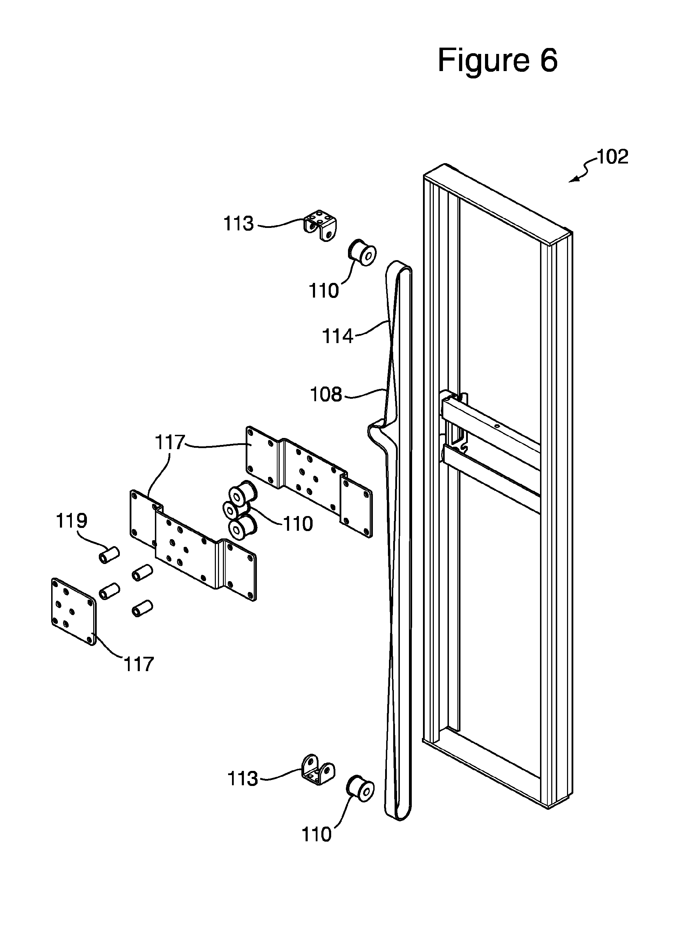

Figures 4, 5 and 6 show a further embodiment of the trolley 102 with a preferred alternative to the pulley and winch configuration. Trolley 102 here comprises a belt drive 104 which serves to move shelf assembly 106. The belt drive 104 comprises a belt 108 which runs around pulleys 110, situated at the top and bottom of mast 112 and which are held in place by brackets 113. The belt 108 is twisted substantially 90 degrees 114 such that it may be fed through planetary gearing 116 and which are held in place by plates 117, which are themselves kept in position by spacers 119. The belt drive 104 is driven by a handle (not shown). This preferred embodiment has three key advantages - first, the belt drive 104 holds the shelf assembly 106 captive so that it resists movement, and in particular is held in place when the trolley 102 is in the flat folded position. Second, the belt 108 itself it strong and has a long operating life. Third, the planetary gearing 116 provides a particularly efficient means of adjusting the position of shelf assembly 106.

## Claims

1. A folding hand operable trolley (2),
comprising a chassis (4), with a support member (14),
and at least one elongate mast (6) with an upper (30) and a lower extremity,
said trolley further comprising a load bearing shelf (42), the shelf being attached, in use, to the mast and the position of the shelf relative to the mast being adjustable,
and said mast and said chassis being pivotally linked via an elongate linking member (52), the linking member being attached to the mast via a first pivot point (74), and being connected to the chassis via a second pivot point (76),
said linking member allowing the folding of the mast with respect to the chassis, from a folded position to an upright position and vice versa, wherein in said folded position the mast occupies a plane substantially parallel to that of the chassis, and wherein in said upright position the mast is positioned substantially perpendicular to the chassis whilst the lower extremity of the mast rests on said support member; and
wherein when the mast is in the upright position, the linking member extends rearwards at an angle between said mast and said chassis, thereby said support member and said linking member support the mast in said upright position.

2. A trolley according to claim 1, further comprising a guide (74) for guiding the displacement of the lower extremity of the mast.

3. A trolley according to claim 2 wherein the guide comprises a secondary elongate linking member (74).

4. A trolley according to claim 2 wherein the guide comprises a tab and groove combination.

5. A trolley according to any of the preceding claims, wherein the attachment further comprises a shelf (42) and a hinge, the hinge allowing the shelf to be moved from a first position wherein the shelf occupies a substantially parallel plane to the mast, and a second position wherein the shelf occupies a position substantially perpendicular to the mast.

6. A trolley according to any of the previous claims, wherein the linking member comprises a pair of spaced, substantially parallel arms joined by a cross bar (56).

7. A trolley according to claim 6, wherein the mast is attached to the cross bar.

8. A trolley according to any of the preceding claims, wherein the mast has a base and wherein the trolley comprises two pairs of wheels (8, 10), with the pair located nearest to the base of the mast (10) being the larger of the said two pairs.

9. A trolley according to any of the preceding claims, wherein the chassis comprises a raised portion (70) upon which the base of the mast rests, when the said mast is in the upright position.

10. A trolley according to any of the preceding claims, wherein the chassis comprises a releasable fastener (78), for securing the mast to the chassis when it is in the upright position.
